# FASCICULE DE BREVET EUROPEEN

(11) **EP 0 852 910 B1**
(45) Date de publication et mention de la délivrance du brevet: **28.08.2002**
(21) Numéro de dépôt: 98400024.0
(22) Date de dépôt: 08.01.1998
(51) Int. Cl.: A23J 3/18, A23J 3/34, C12N 1/20

(54) **Composition azotée résultant de l'hydrolyse du gluten de blé et son procédé de fabrication**
Stickstoff enthaltende Zusammensetzung erhalten durch die Hydrolyse von Weizengluten und Verfahren zu ihrer Herstellung
Nitrogen-containing composition resulting from the hydrolysis of wheat gluten and process for producing the same

(30) Priorité: 10.01.1997 FR 9700198
(43) Date de publication de la demande: 15.07.1998
(73) Titulaire: Roquette Frères, 62136 Lestrem (FR)
(72) Inventeur: Saniez, Marie-Hélène, 59350 Saint Andre (FR); Gouy, Pierre-Antoine, 59840 Perenchies (FR); Erpicum, Thomas, 62136 Richebourg (FR)
(74) Mandataire: Boulinguiez, Didier

(56) Documents cités:
- EP-A- 0 026 125
- WO-A-89/06091
- DD-A- 233 932
- DE-A- 4 116 744
- US-A- 2 628 931

## Description

La présente invention a pour objet une composition azotée résultant de l'hydrolyse du gluten de blé par de l'eau de trempe issue de l'amidonnerie de maïs.

La présente invention concerne également un procédé de fabrication d'une telle composition azotée, ainsi que son application comme milieu de culture dans les industries de fermentation et comme aliment ou additif alimentaire dans des compositions destinées aux humains ou aux animaux.

Le gluten de blé d'une part, et le corn steep d'autre part sont connus pour être une source d'azote dans les industries de fermentation.

Cependant, le gluten de blé est une source d'acides aminés mal équilibrée. C'est pourquoi son utilisation dans les industries de fermentation et comme aliment ou additif alimentaire nécessite de le supplémenter en acides aminés par addition de substances contenant les acides aminés indispensables permettant de rééquilibrer sa composition. Cet apport d'acides aminés peut se faire sous la forme de corn steep, de protéines de coton, d'extraits de levure, ou d'acides aminés libres.

Quoi qu'il en soit, le gluten de blé sous forme non hydrolysée, enrichie ou non en acides aminés, est une source d'azote difficilement utilisable, voire inutilisable, dans les industries de fermentation de par ses propriétés viscoélastiques. Sa solubilisation s'avère donc indispensable si on souhaite le mettre en oeuvre dans des procédés de biotechnologie ou en tant qu'aliment ou additif alimentaire.

Cette solubilisation du gluten peut être réalisée soit par hydrolyse acide, soit par hydrolyse alcaline, soit par hydrolyse enzymatique. Par exemple, la demande de brevet US 5.273.773 décrit l'obtention de produits partiellement hydrolysés grâce à des traitements spécifiques de protéines. Ces produits sont intéressants pour l'amélioration de la qualité des aliments ou comme agent dispersant.

L'utilisation des enzymes endogènes de microorganismes tels que des levures a également déjà été mise à profit pour hydrolyser des protéines telles que celles du soja ou du maïs (demande internationale de brevet WO-A-91/16447). L'hydrolyse est alors effectuée par les enzymes responsables de l'autolyse de la levure, enzymes non commercialisées, ou par l'addition d'enzymes exogènes ou le mélange des deux. Le mélange hydrolysé est alors utilisé en alimentation.

Le corn steep qui, rappelons-le, est obtenu par évaporation de l'eau de trempe issue de l'amidonnerie de maïs, est connu pour être une source d'azote très intéressante dans les industries de fermentation. Il est utilisé dans la plupart des productions biologiques, d'antibiotiques, de vitamines, d'acides organiques, d'enzymes. Il est également utilisé dans la production de biomasse.

La trempe du maïs constitue la première étape de l'extraction de l'amidon en amidonnerie humide. Elle consiste à maintenir le maïs placé dans les silos pendant un temps donné au sein d'une eau chaude contenant une faible quantité d'anhydride sulfureux, ceci afin de faciliter la séparation ultérieure protéines-cellulose-amidon, et d'empêcher par ailleurs la croissance de microorganismes indésirables.

Au cours de cette opération, deux phénomènes essentiels prennent place simultanément. D'une part, les matières solubles hautement fermentescibles contenues dans les grains de maïs sont transférées dans les eaux de trempe. D'autre part, les conditions de trempe (présence de sulfites, de sucres, profil de température) sont favorables au développement rapide de bactéries, lactiques principalement.

Les eaux de trempe sont ensuite concentrées à environ 50 % de matière sèche dans un évaporateur, pour obtenir un sirop épais appelé couramment "corn steep" par l'homme du métier.

Le principal intérêt du corn steep tient à sa composition particulière due au transfert et à la transformation par fermentation lactique de ces matières solubles. Cette composition contient des facteurs favorables à la croissance des microorganismes, et font du corn steep une source idéale de matières nutritives, notamment dans les industries de fermentation.

En effet, le corn steep contient en tant que sources de carbone facilement assimilables : des sucres et des acides organiques, comme sources d'azote : des amino-acides et des polypeptides et comme sources d'oligo-éléments nécessaires à la croissance des microorganismes : des agents "tampons" et des minéraux.

En outre, il constitue un substrat relativement peu coûteux, comparativement aux extraits de levures qui représentent la matière de référence dans ce domaine, et qui sont utilisés également en alimentation humaine et animale.

Pour une utilisation en fermentation, le corn steep doit être soumis au préalable à une stérilisation, dont les conditions de température et de pH ainsi que la durée sont choisies afin d'obtenir la destruction des microorganismes. Ainsi, la température de stérilisation est généralement comprise entre 105 et 130°C et le pH varie entre 3,0 et 8,0.

La demande de brevet JP-A-5.336.954 enseigne que le mélange de corn steep avec une protéine telle que l'albumine d'oeuf soumis à une hydrolyse enzymatique peut être intéressant comme source d'azote pour la croissance des microorganismes suivants : *Escherichia coli, Bacillus subtilis, Lactobacillus brevis, Serratia marcescens.* Ce milieu de culture est aussi plus économique qu'un milieu à base de peptone.

Des mélanges de substances azotées ont été également décrits dans le brevet US-A-2.628.931 où le corn steep est mélangé à du gluten de blé puis stérilisé en autoclave à une température comprise entre 120 et 122°C avant d'être inoculé avec une souche de *Streptomyces griseus*. Cette source d'azote est favorable à la production de Streptomycine.

La demande de brevet internationale WO-A-89/06091 propose un procédé de modification du gluten consistant à traiter du gluten, humide ou sec, avec un effluent provenant d'une opération du procédé d'extraction de l'amidon. Ce procédé tire parti de la présence, en très faible quantité, d'acide lactique dans un tel effluent pour modifier le gluten. Cet effluent subit préalablement un traitement, thermique ou non, pour détruire les microorganismes et inactiver les enzymes qui y sont présents. Le temps de traitement du gluten est compris entre 10 mn et 2 h, durée qui ne permet pas une hydrolyse enzymatique du gluten. De ce fait, le gluten ainsi modifié a des propriétés émulsifiantes et de moussage améliorées, propriétés qui ne sont pas du tout recherchées dans les industries de fermentation et de l'alimentation animale.

Le procédé de trempe du maïs décrit dans le brevet EP-B-026.125 montre que la fermentation lactique caractéristique de ce procédé est totalement maîtrisée et que les bactéries de la trempe présentent, grâce à ce procédé, une activité biologique maximale.

Par ailleurs, E. Tsakalidou et al. (J. Dairy Sci., 76 : 2145 - 2151, 1993) et G. Pritchard et al. (FEMS Microbiology Reviews 12 (1993) 179-206) ont montré que les bactéries lactiques possèdent des systèmes protéolytiques complexes localisés dans la paroi cellulaire, la membrane cytoplasmique ou à l'intérieur de la cellule, que les enzymes faisant partie de ces systèmes protéolytiques travaillent à 48°C à des pH compris entre 4 et 6.

Cette activité protéolytique puissante des bactéries lactiques contenues dans l'eau de trempe, éventuellement renforcée par une protéase commerciale, va permettre la protéolyse du gluten de blé. Cette protéolyse est facilitée par l'action solubilisante de l'acide lactique (contenu dans l'eau de trempe) sur le gluten de blé.

L'invention se rapporte donc en premier lieu à une composition azotée résultant de l'hydrolyse du gluten de blé, caractérisée en ce qu'elle présente un rapport des concentrations en phosphore inorganique sur phosphore total (Pi/Pt) supérieur ou égal à 0,15 et un rapport des concentrations en azote aminé sur azote total (Na/Nt) supérieur ou égal à 0,11.

Les concentrations en phosphore inorganique et phosphore total sont mesurées selon des méthodes connues et telles que celles décrites ci-après.

En ce qui concerne le phosphore inorganique, la méthode de référence consiste à extraire le phosphore minéral ou inorganique par une solution d'acide trichloracétique, à former un complexe phosphomolybdique par réaction entre le phosphore inorganique et du molybdate d'ammonium et à mesurer l'absorbance de ce complexe au spectrophotomètre à une longueur d'onde de 805 nm.

En ce qui concerne le phosphore total, son dosage est réalisé selon la méthode norme ISO 3946, qui repose sur le même principe que celui appliqué à la détermination de la concentration en phosphore inorganique, décrit ci-dessus. Une étape préalable est toutefois mise en oeuvre, étape qui consiste à détruire les matières organiques des produits à doser de manière à transformer tout le phosphore organique en phosphore inorganique (le phosphore total est donc le phosphore organique plus le phosphore inorganique), par minéralisation à l'aide d'un mélange sulfonitrique et transformation des phosphates en orthophosphates. Les étapes suivantes consistent à former le complexe molybdique, puis à mesurer l'absorbance à une longueur d'onde de 825 nm.

De préférence, le rapport concentration phosphore inorganique sur concentration en phosphore total (Pi/Pt) est compris entre 0,20 et 0,35, et de manière encore plus préférentielle, entre 0,25 et 0,35.

Les concentrations en azote aminé et azote total sont mesurées selon des méthodes connues et telles que celles décrites ci-après.

En ce qui concerne l'azote aminé, son dosage est effectué en faisant réagir la fonction amine du produit à doser avec un excès de formaldéhyde, pour donner un acide qui peut être titré avec une solution de soude. L'azote aminé libre est équivalent (mole à mole) à l'hydroxyde de sodium utilisé pour le titrage.

En ce qui concerne l'azote total, son dosage est réalisé selon la méthode norme ISO 3188 qui consiste en une minéralisation du produit à doser par l'acide sulfurique en présence d'un catalyseur, puis en une alcalinisation des produits de la réaction et en une distillation de l'ammoniac libéré recueilli dans une solution d'acide borique qui est titré par une solution d'acide sulfurique.

Les taux de protéines totales et de protéines solubles de la composition conforme à la présente invention sont respectivement compris entre 50 et 85 % sur sec et 40 et 65 % sur sec.

On entend par taux de protéines totales, l'azote total multiplié par un facteur 6,25.

On entend par taux de protéines solubles, l'azote total multiplié par un facteur 6,25 contenu dans la fraction soluble qui correspond au surnageant obtenu après dispersion de l'échantillon dans l'eau distillée et centrifugation.

En outre, la composition azotée conforme à l'invention se caractérise notamment par une teneur en leucine libre supérieure ou égale à 1300mg/100g sec et une teneur en alanine libre supérieure ou égale à 1100mg/100g sec.

Enfin, la composition azotée objet de la présente invention comprend de nombreux macro- et microéléments minéraux. Elle se caractérise par une teneur en cendres comprise entre 3 et 12 % sur sec et, de préférence, comprise entre 4 et 6 % sur sec. Une telle teneur en macro- et microéléments minéraux naturels, combinée avec les autres caractéristiques de la composition selon l'invention et qui sont décrites ci-dessus, lui confère des propriétés avantageuses pour son utilisation en alimentation animale (richesse en azote élevée, teneur en cendres < 6 %,).

L'invention se rapporte en second lieu à un procédé de fabrication d'une composition azotée résultant de l'hydrolyse du gluten de blé par de l'eau de trempe de maïs et qui possède les caractéristiques mentionnées ci-dessus.

Ce procédé consiste essentiellement à mélanger du gluten de blé avec de l'eau de trempe issue de l'amidonnerie de maïs.

Le gluten de blé utilisé est de préférence un gluten vert issu du procédé d'extraction du gluten par lixiviation de la farine de blé. En effet, avant séchage, le gluten dit "vert" contient également une flore lactique naturelle qui est une source d'enzyme protéolytique intéressante. Il est également une source de phytase naturelle végétale qui peut être mise à profit pour hydrolyser les phytates contenus dans l'eau de trempe.

Le procédé de l'invention tire parti à la fois de la flore lactique du gluten vert, de l'effet protéolytique des enzymes des bactéries lactiques présentes dans l'eau de trempe, et de l'action solubilisante de l'acide lactique présent également dans l'eau de trempe.

Le procédé de fabrication de la composition azotée conforme à l'invention permet ainsi l'obtention d'une gamme de compositions que l'on peut définir comme des cohydrolysats d'eau de trempe et de gluten de blé. L'hydrolyse du gluten de blé est effectuée grâce aux enzymes protéolytiques et peptidasiques des ferments lactiques. Cette hydrolyse peut encore être améliorée par l'addition d'une protéase exogène commerciale qui va agir en synergie avec les enzymes naturelles des ferments lactiques. Les phytates de l'eau de trempe sont hydrolysés grâce à la phytase naturelle du blé, cette dernière n'étant pas dénaturée par le procédé d'extraction de gluten utilisé.

Ainsi, de manière surprenante et inattendue, la Demanderesse a mis en évidence que si l'on effectue l'hydrolyse du gluten de blé contenant une phytase naturelle en présence d'eau de trempe issue de l'amidonnerie de maïs et contenant des ferments lactiques actifs, une hydrolyse spécifique du gluten de blé ainsi qu'une hydrolyse spécifique de l'eau de trempe s'effectuent. Cette double hydrolyse confère à la composition azotée finale des propriétés bien particulières telles que l'induction de la croissance de différents microorganismes, l'induction de la production de certains métabolites et ceci, de manière bien plus avantageuse que le mélange gluten sec/corn steep.

Le procédé selon l'invention comprend les étapes successives consistant à mélanger de l'eau de trempe issue de l'amidonnerie de maïs avec du gluten de blé, à laisser agir, sous agitation, les enzymes et l'acide lactique naturellement présents dans le gluten et l'eau de trempe pendant une durée qui dépend des quantités mises en oeuvre, à inactiver les enzymes, puis à concentrer la composition résultante par évaporation.

Les matières mises en oeuvre dans le procédé de l'invention sont donc l'eau de trempe issue de l'amidonnerie de maïs et le gluten de blé. L'eau de trempe provient, de préférence, du dernier silo de trempe du procédé décrit dans le brevet FR-B-026.125. Elle présente une matière sèche comprise entre 7 et 13 Brix environ, et de préférence égale à 10 Brix. On rappelle que le Brix est une unité de mesure couramment employée dans l'industrie amidonnière, et que le Brix d'une eau de trempe est déterminé très aisément par lecture au réfractomètre. Un Brix d'environ 10 correspond pour le produit visé par l'invention à une matière sèche d'environ 10 %.

L'eau de trempe utilisée dans le procédé conforme à l'invention n'a subi aucun traitement thermique (évaporation), mécanique ou chimique susceptible de détruire les enzymes protéolytiques qui y sont naturellement présentes. Il ne s'agit donc pas de corn steep, lequel est obtenu par évaporation de l'eau de trempe.

Comme déjà mentionné, le gluten de blé mis en oeuvre dans le procédé est de préférence du gluten de blé vert , quoique l'on puisse également mettre en oeuvre du gluten de blé sec.

En fonction des applications recherchées pour la composition azotée de l'invention, il est possible d'effectuer des mélanges dans des proportions eau de trempe/gluten de blé comprises entre 1/1 et 1/3, ces rapports étant exprimés sur une base sèche.

Selon un mode préférentiel de réalisation de l'invention, on ajoute au mélange constitué par l'eau de trempe et le gluten une enzyme exogène choisie dans le groupe constitué par les protéases et les phytases seules ou en mélange entre elles.

Les quantités de l'enzyme exogène utilisée dépendent de l'activité propre à l'enzyme choisie et des conditions de sa mise en oeuvre (concentration du substrat, pH, température, durée du traitement). Ces quantités sont comprises entre 0,25 % et 1 % par rapport à la matière sèche du substrat, ce qui correspond environ à une plage de 0,05 UA (Unité ANSON) à 2 UA pour 100g de matière sèche du substrat.

Les protéases utilisables dans le procédé selon l'invention sont choisies en particulier dans le groupe constitué par les protéases acides, telles que celles fabriquées par la Société BIOCON (ACID PROTEASE LB 59), par la Société GIST BROCADES (PROTEASE A), par la Société ROHM (COROLASE PS), par la Société GENENCOR (PROTEASE B99), ou encore par la Société NOVO (FLAVOURZYME, NEUTRASE).

Les protéases commerciales se présentent sous forme de préparations enzymatiques brutes extraites de microorganismes et possèdent de ce fait des activités enzymatiques secondaires telles que phosphatase, cellulase et lipase. Ces enzymes secondaires, et en particulier les phosphatases, participent avantageusement au traitement de l'eau de trempe du maïs.

La phytase exogène utilisable dans le procédé selon l'invention est par exemple celle fabriquée par la Société BASF (NATUPHOS).

Le mélange de gluten, d'eau de trempe et éventuellement de protéase exogène est maintenu entre 4 et 8 heures à une température d'environ 48°C. Le pH naturel du mélange, compris entre 5 et 5,5, est conservé. Le traitement est de préférence effectué sous agitation constante.

Lorsque les rapports Pi/Pt et Na/Nt atteignent les valeurs désirées, les réactions enzymatiques peuvent être stoppées par inactivation des enzymes. Pour cela, on a recours à des moyens physiques (température) et/ou chimiques (pH). De préférence, on soumet le milieu réactionnel à un chauffage à 60-90°C pendant un temps compris entre 10 et 30 minutes.

La composition azotée peut alors être concentrée à 50 % de matière sèche par évaporation, soit pour être conservée sous forme liquide, soit pour être atomisée ou déshydratée d'une autre manière appropriée.

La composition selon l'invention, grâce à ses caractéristiques particulières, présente un intérêt certain lorsqu'elle est utilisée comme substrat de la croissance microbienne dans les industries de fermentation. Ainsi, lorsque la composition conforme à l'invention est fabriquée à partir d'un mélange eau de trempe/gluten dans un rapport 1/1 (exprimé sur une base sèche), elle constitue un substrat satisfaisant à la production dans de bonnes conditions de levures, de bactéries lactiques, ou d'autres microorganismes.

Elle est également particulièrement adaptée à la production de métabolites obtenus par des microorganismes génétiquement modifiés.

En outre, elle intéresse l'industrie alimentaire, pour ses propriétés nutritionnelles et pour ses propriétés aromatiques, et est ainsi utilisable en tant qu'aliment ou en tant qu'exhausteur de goût dans des compositions destinées à l'alimentation humaine ou animale. Dans ce cas, la composition conforme à l'invention est fabriquée à partir d'un mélange eau de trempe/gluten dans un rapport 1/3 (exprimé sur une base sèche).

D'autres caractéristiques et avantages de la présente invention apparaîtront clairement à la lecture des exemples donnés ci-après qui viennent illustrer l'invention sans toutefois la limiter.

### EXEMPLE 1

Dans un réacteur de 2 l, 1 l d'eau de trempe à 10 % de matière sèche, issue du dernier silo de trempe du procédé décrit dans le brevet FR-B-026.125, est mélangée avec 1 kg de gluten vert. 0,5 g d'enzyme du type protéase acide BIOCON LB59 est également ajouté au mélange. Le pH naturel de 4,5 du mélange est conservé, il n'y a pas de régulation de pH. Le mélange est maintenu pendant 4 heures à 48°C. On constate alors que l'acide lactique présent dans l'eau de trempe permet une solubilisation immédiate du gluten, ce qui facilite son hydrolyse.

Après 4 heures de réaction, on chauffe le mélange à une température de 70°C afin de neutraliser les enzymes et de détruire les bactéries lactiques. Le mélange est alors concentré à 50 % de matière sèche et/ou peut être également atomisé.

Selon le rapport eau de trempe/gluten de blé que l'on veut finalement obtenir, les quantités de matières premières utilisées peuvent varier de la façon suivante :

| **Composition** | **Rapport** | **Eau de trempe** **(en litre) à 10% MS** | **Gluten vert** **(en kg) à 30% MS** |
|---|---|---|---|
| A | 1/1 | 1 | 0,3 |
| B | 1/1,8 | 1 | 0,6 |
| C | 1/3 | 1 | 1,0 |

A titre de comparaison et afin de démontrer l'intérêt du procédé conforme à l'invention, on a mélangé un gluten préalablement hydrolysé à l'aide de la même protéase exogène avec une quantité de corn steep, de manière à obtenir un ratio 1/3 corn steep/gluten en matière sèche (MS) (composition D). On entend par gluten préalablement hydrolysé un gluten présentant un minimum de solubilité de 50 %.

| **Composition** | **Rapport** | **Eau de trempe** **(en litre) à 50% MS** | **Gluten sec** **(en kg)** |
|---|---|---|---|
| D | 1/3 | 0,2 | 0,3 |

Le mélange C selon l'invention présente la composition indiquée ci-après. La composition du mélange D est également indiquée afin de démontrer l'intérêt de l'utilisation de l'activité protéolytique de l'eau de trempe.

| | **Mélange D** | **Mélange C** |
|---|---|---|
| Matières protéiques | 65 - 78 % | 65 - 72 % |
| Sucres réducteurs | 0,5 % | 0,1 % |
| Fer | < 100 ppm | < 100 ppm |
| Azote aminé en N % | 0,8 à 1 % | 1,3 à 2 % |
| Na/Nt | 0,7 à 0,10 | 0,11 à 0,20 |
| Cendres | 5 à 6 % | 5 à 6 % |
| Pi/Pt | < 0,25 | > 0,25 |
| Nt | 10 à 12 % | 10 à 12 % |

La composition C selon l'invention se caractérise donc par :
- une teneur en azote supérieure à 10 %,
- une teneur en cendres inférieure à 6 %,
- un ratio azote aminé/azote total > 0,11,
- une teneur en fer inférieure à 100 ppm,
- une teneur en sucres réducteurs inférieure à 0,1 %,
- une teneur en phosphore total supérieure à 1 %,
- une teneur en alanine > 1100 mg/100g sec,
- une teneur en leucine > 1300 mg/100g sec.

Les analyses en aminoacides libres des compositions C et D sont données dans le tableau suivant :

| **mg/100g sec** | **Mélange D** | **Mélange C** |
|---|---|---|
| A. aspartique | 20 | < 10 |
| Thréonine | 145 | 240 |
| Sérine | 165 | 375 |
| A. glutamique | 60 | 165 |
| Proline | 470 | 645 |
| Glycine | 100 | 180 |
| Alanine | 785 | 1160 |
| Valine | 270 | 425 |
| Cystine | < 10 | < 10 |
| Méthionine | 170 | 300 |
| Isoleucine | 170 | 290 |
| Leucine | 650 | 1335 |
| Tyrosine | 25 | 85 |
| Phénylalanine | 275 | 545 |
| Histidine | 50 | 15 |
| Ornithine | < 10 | 75 |
| Lysine | 35 | 75 |
| Arginine | 50 | 60 |

Quant aux propriétés physiques, le mélange C présente une solubilité supérieure à 70 %.

Par solubilité, on entend la matière sèche du surnageant obtenu après centrifugation d'un échantillon dilué dans l'eau exprimée en pourcentage de la matière sèche totale mise en oeuvre.

### EXEMPLE 2

Pour pouvoir démontrer l'action spécifique de l'eau de trempe sur le gluten de blé, quatre essais ont été réalisés conformément au procédé de l'invention :
Essai 1 : Gluten (100g sec/l) + eau de trempe (1 litre à 10 Brix),
Essai 2 : Gluten (100g sec/l) + eau de trempe (1 litre à 10 Brix) + protéase 0,5 %/P. prod. sec,
Essai 3 : Gluten (100g sec/l) + corn steep (0,5 litre à 20 Brix),
Essai 4 : Gluten (100g sec/l) + corn steep (0,5 litre à 20 Brix) + protéase 0,5 %/P. prod. sec.

On travaille à pourcentage de matières sèches égal. Le corn steep 20 Brix est dilué pour obtenir une matière sèche de 10 %.

Le fait de remplacer l'eau de trempe par du corn steep liquide 20 Brix permet de vérifier l'efficacité des enzymes protéolytiques de l'eau de trempe sur les protéines du gluten. Dans le corn steep, ces enzymes sont en effet détruites au niveau du traitement thermique de l'évaporation.

Les résultats (exprimés en %/sec) sont rassemblés dans le tableau qui suit.

| **Essai** | **1** | **2** | **3** | **4** |
|---|---|---|---|---|
| Matière sèche | 53 | 53 | 53 | 48 |
| N. 6,25 total | 64 | 64 | 65 | 65 |
| N. 6,25 soluble | 31 | 50 | 25 | 50 |
| N. 6,25/N. 6,25 | 0,5 | 0,8 | 0,4 | 0,8 |
| soluble / total N. aminé | 1,74 | 2,13 | 1,55 | 1,90 |
| Na/Nt | 0,17 | 0,21 | 0,15 | 0,18 |
| Cendres | 11 | 12,5 | 11 | 11 |
| Total A. aminés libres | 8,1 | 11,5 | 7,2 | 10,3 |
| Nt | 10,24 | 10,24 | 10,4 | 10,4 |
| Pi/Pt | 0,2 | 0,22 | 0,2 | 0,22 |

La solubilité (en % sur sec) des compositions des essais 1 à 4 en fonction du pH a également été mesurée. Les résultats obtenus sont rassemblés ci-après.

| **Essai** | **1** | **2** | **3** | **4** |
|---|---|---|---|---|
| pH 3,0 | 50 | 85 | 40 | 85 |
| pH 4,0 | 50 | 82 | 40 | 75 |
| pH 5,0 | 58 | 82 | 47 | 80 |
| pH 6,0 | 54 | 79 | 44 | 80 |
| pH 7,0 | 54 | 77 | 44 | 80 |
| pH 8,0 | 54 | 74 | 45 | 81 |

Les résultats analytiques de ces quatre essais mettent en évidence l'action importante des enzymes protéolytiques présentes dans l'eau de trempe. Si l'on compare l'essai 1 à l'essai 3, on s'aperçoit que le rapport N. 6,25 soluble/N. 6,25 total, ainsi que la solubilité aqueuse, augmentent de 10 % dans le cas où de l'eau de trempe est utilisée. Il y a donc une action des enzymes protéolytiques contenues dans l'eau de trempe.

Cette différence disparaît lorsque l'on ajoute 0,5 %/sec d'enzyme (protéase) au mélange. C'est la comparaison des essais 2 et 4 qui le montre.

Dans ce cas, l'absence d'enzymes protéolytiques dans le corn steep est un facteur limitant pour la solubilisation du gluten. Une diminution de la quantité d'enzyme ajoutée provoquerait une baisse de la solubilité du gluten. Par contre, en utilisant l'eau de trempe, il est possible de diminuer la quantité d'enzyme ou d'augmenter la concentration en gluten dans le mélange tout en gardant une solubilité maximale du gluten.

### EXEMPLE 3

Les productions de céphalosporine ont été évaluées en fonction des compositions azotées C et D de l'exemple 1.

La production de céphalosporine a été effectuée dans les conditions suivantes. Le microorganisme utilisé a été le *Céphalosporium acremonium* ATCC 11550 régénéré sur gélose CGA dont la composition est la suivante (extrait autolytique de levure 5 g/l, Glucose 20 g/l, Chloramphénicol 0,1 g/l, Agar agar 15 g/l).

Les erlens de production sont inoculés à l'aide du *Cephalosporium* provenant d'un milieu de préculture de 120 h. Ce milieu de préculture est constitué de 100 ml de bouillon CGA qui est introduit dans un erlen de 500 ml à 2 chicanes, erlen qui a été ensemencé à l'aide d'un carré de gélose CGA sur lequel le *Cephalosporium* a poussé pendant 7 jours.

Les erlens de production contenant 75 ml de milieu de production, sont ensemencés avec 2 ml de préculture et sont agités à 120 tr/mn pendant 120 h à 30°C. Les milieux de production contiennent :
50 g/l de glucose
2,5 g/l de KH₂PO₄
5 g/l de CaCO₃
6 g/l d'huile de soja
3,3 g/l d'équivalent azote du produit testé

Les produits testés sont la composition C, la composition D et une solution de protéine de coton commercialisée par TRADERS PROTEIN sous l'appellation PHARMAMEDIA^{R}, correspondant à un équivalent azote de 2,6 g/l.

Après 120 h et ceci afin d'évaluer la production de céphalosporine, 5 ml de chaque erlen de production sont prélevés et centrifugés pendant 15 mn. 65 µl de surnageant d'une dilution d'antibiotique sont placés sur des disques de cellulose eux mêmes placés à la surface d'une boîte de Petri sur laquelle la souche test sensible à la céphalosporine a été étalée, à savoir *Staphylococcus aureus* ATCC 6538.

Après 24 h à 30°C, le diamètre d'inhibition de croissance du *Staphylococcus* est mesuré. A partir des résultats de la gamme de céphalosporine C, on peut tracer le graphique zone d'inhibition en fonction de la concentration en céphalosporine C. Ainsi, les différents échantillons testés ont donné les résultats suivants :

| | |
|---|---|
| Composition D | 7,85 mg/10 ml |
| Composition C | 11,6 mg/10 ml |
| Pharmamédia^{R} | 5,6 mg/10 ml |

La composition C selon l'invention est la meilleure parmi celles testées.

### EXEMPLE 4

L'influence des compositions C et D obtenues dans l'exemple 1 a été testée sur la production de pénicilline selon le protocole décrit ci-après. Une suspension de spores d'une souche P₂ (provenant du laboratoire PANLABS) est utilisée comme inoculum.

Les flacons de préculture de 500 ml de volume utile et contenant le milieu suivant ajusté à pH 5 : 3 % de glucose, 1 % de lactose, 0,25 % d'équivalent azote du produit à tester, 0,2 % de (NH₄)₂ SO₄, 0,5 % de CaC₃O, 0,05 % de KH₂PO₄, 1 % de Pharmamédia^{R}, 1 % d'extrait de levures, sont cultivés sur table à secousses à 220 tr/mn pendant 45 h à 25°C.

2 ml de ce milieu sont introduits dans le milieu de production, répartis à raison de 35 ml dans des flacons de 500 ml à deux chicanes. La composition du milieu est la suivante : 12 % de lactose, 1 % de (NH₄)₂SO₄, 1 % CaCO₃ , 0,05 % de KH₂PO₄, 0,5 % de K₂SO₄, 0,23 % d'équivalent azote du produit à tester, 1 % d'huile de soja, pH 6,6 à 25°C pendant 6 jours et sous une agitation de 220 tr/mn.

Après 6 jours, on centrifuge pendant le temps nécessaire à l'obtention d'un surnageant limpide qui contient la pénicilline produite.

Des disques buvard sont imbibés de 65 µl des surnageants et déposés dans des boîtes de Petri contenant un milieu gélose trypticase soja préalablement ensemencé avec la souche de *Sarcina lutea* ATCC 9341 sensible à la pénicilline.

On mesure alors le diamètre des zones d'inhibition de croissance observées dans les deux cas après incubation pendant 24 h à 30°C. A partir des résultats de la gamme étalon donnant la concentration en pénicilline en fonction du diamètre d'inhibition, les résultats obtenus ont été les suivants :

| | |
|---|---|
| Composition D | 7,20 g/l |
| Composition C | 10,65 g/l |
| Pharmamédia^{R} | 6,80 g/l |

La composition C selon l'invention est la meilleure parmi celles testées.

### EXEMPLE 5

L'influence des compositions C et D obtenues dans l'exemple 1 a été testée sur la production de tétracycline.

La souche utilisée est le *Streptomyces aureofaciens* DSM 40127.

A partir de boîtes de Petri contenant le milieu suivant : 20 g/l amidon, 5 g/l de bio-soyase, 5 g/l d'extraits de levure, 10 g/l de glucose, 17 g/l agar, 1 g/l carbonate de calcium, sur lequel la souche de production a sporulé, on récupère les cellules en grattant la surface du milieu sur 1 cm².

Il est alors possible d'inoculer le milieu de production suivant : 35 g/l de maltodextrine, 4 g/l d'huile de soja, 5 g/l de CaCO₃, 1 g/l de MgSO₄ et 1 g/l de KH₂PO₄ et 0,83 g/l d'équivalent azote de la composition à tester.

Après 120 h de culture à 30°C, sous agitation à 220 tr/mn, d'erlens de 500 ml contenant 500 ml de milieu, on centrifuge de façon à obtenir un surnageant limpide. Ce surnageant est placé sur une pastille de cellulose, elle même placée à la surface d'une boîte de Petri contenant le milieu sur lequel a été étalé un inoculum de *Sarcina lutea*, souche sensible à la tétracycline.

On mesure alors le diamètre des zones d'inhibition de croissance observée après incubation pendant 24 h à 30°C. A partir des résultats de la gamme étalon donnant la concentration en tétracycline en fonction du diamètre d'inhibition, les résultats du tableau suivant montrent l'intérêt de la composition C selon l'invention dans cette application.

| | |
|---|---|
| Composition D | 3,1 mg/10 ml |
| Composition C | 3,5 mg/10 ml |
| Pharmamédia^{R} | 2,2 mg/10 ml |

### EXEMPLE 6

Les trois études décrites ci-après consistent à suivre l'augmentation du nombre de cellules en fonction du temps dans un milieu de culture contenant les compositions azotées C, D de l'exemple 1 et des extraits de levure.

La première étude concerne la levure *Saccharomyces cerevisiae.*

On prépare des milieux de culture par addition dans de l'eau déminéralisée de glucose à raison de 10 g/l et 0,1 g/l d'équivalent azote des différentes compositions nutritives.

On ensemence alors 100 ml de chacun de ces milieux avec 0,1 % en volume d'une préculture de la souche. L'incubation est réalisée à 30°C sous une agitation de 280 tr/mn pendant 24 h. Les numérations sont effectuées aux temps 0, 8, 24 h sur milieu OGA (Oxytétracycline - Glucose - Agar). Les résultats obtenus sont rassemblés dans le tableau ci-après.

| **CFU/ml** | **0 h** | **8 h** | **24 h** |
|---|---|---|---|
| **Composition D** | 4,2.10³ | 1,9.10⁶ | 4,1.10⁸ |
| **Composition C** | 1,7.10³ | 5,8.10⁶ | 8,9.10⁸ |
| **Extrait de levure** | 3,1.10³ | 1,1.10⁶ | 3,9.10⁸ |

La population obtenue est 2 fois plus importante avec la composition C selon le procédé, que celle obtenue avec l'extrait de levure ou la composition D.

La seconde étude a été réalisée avec la souche *Bacillus subtilis* dans des conditions identiques à celles qui viennent d'être décrites. Les milieux de culture sont préparés par addition de glucose (10 g/l), de sels (MgSO₄, KH₂PO₄, tous deux à 0,05 g/l) et des compositions nutritives C et D ainsi que des extraits de levure en équivalent azote 0,1 g/l. Les conditions d'ensemencement et d'incubation sont identiques à celles décrites précédemment. Les numérations sont effectuées aux temps 0, 8 et 24 h sur milieu gélose trypticase soja. Les résultats donnés ci-après confirment les conclusions précédentes à savoir l'intérêt des compositions azotées selon l'invention comme substrat de fermentation.

| **CFU/ml** | **0 h** | **8 h** | **24 h** |
|---|---|---|---|
| **Composition D** | 3,3.10² | 2,3.10⁵ | 1,8.10⁷ |
| **Composition C** | 3,3.10² | 5,9.10⁵ | 4,9.10⁷ |
| **Extrait de levure** | 2,9.10² | 3,1.10⁵ | 3,2.10⁷ |

La troisième étude a été réalisée avec la souche *Lactobacillus plantarum*.

On prépare des milieux de culture par addition dans de l'eau déminéralisée de glucose à raison de 10 g/l et de la composition azotée C et D de l'exemple 1 ainsi que des extraits de levure d'équivalent azote 0,1 g/l. L'incubation est réalisée à 45°C sous légère agitation pendant 24 h. Les numérations sont effectuées aux temps 0, 8 et 24 h sur milieu MRS (MAN, ROGOSA, SHARP).

| **CFU/ml** | **0 h** | **8 h** | **24 h** |
|---|---|---|---|
| **Composition D** | 3,3.10² | 2,3.10⁵ | 1,8.10⁷ |
| **Composition C** | 3,3.10² | 5,9.10⁵ | 4,9.10⁷ |
| **Extrait de levure** | 2,9.10² | 3,1.10⁵ | 3,2.10⁷ |

Les résultats obtenus montrent l'intérêt de la composition C conforme à l'invention.

### EXEMPLE 7

Le mélange de l'exemple 1 peut également être utilisé en alimentation animale. En effet, étant donné sa composition, on peut l'utiliser comme lactoremplaceur dans l'alimentation des veaux. Les taux de fer pour le ratio 1/3 (sur base sèche) sont, pour trois essais différents, inférieurs à 50 ppm.

Quand on compare les compositions C et D, on voit l'intérêt nutritionnel de la composition C. Dans cette composition C, conforme à l'invention, le phosphore et les acides aminés sont en plus grande disponibilité.

### EXEMPLE 8

On réalise des essais de production de Pénicilline avec différents hydrolysats protéiques comme source d'azote dans les milieux de culture. Cet exemple a pour but de comparer la production de Pénicilline obtenue avec la souche P₂ (*Pénicillium chrysogénum*) dans un milieu à base d'une composition selon l'invention, à celle obtenue par cette même souche mais dans des milieux modifiés où l'on a remplacé la composition selon l'invention par d'autres hydrolysats de blé, pomme de terre et maïs. On travaille à concentration constante en azote total. Les sources d'azote testées ont été les suivantes :
- corn steep,
- corn steep hydrolysé,
- Alburex^{R} N
- Hydrolysat Alburex^{R} N (Alburex^{R} hydrolysé),
- Gluten désamidé (soluble),
- Composition selon l'invention,
- Pharmamédia^{R}.

Les résultats, exprimés en mm (diamètre de la zone d'inhibition), sont rassemblés dans le tableau ci-après :
- corn steep 20
- corn steep hydrolysé 19
- Alburex^{R} N 12
- Alburex^{R} hydrolysé (Alburex^{R} H) 18
- Gluten désamidé 20
- Composition selon l'invention 26
- Pharmamédia^{R} 18

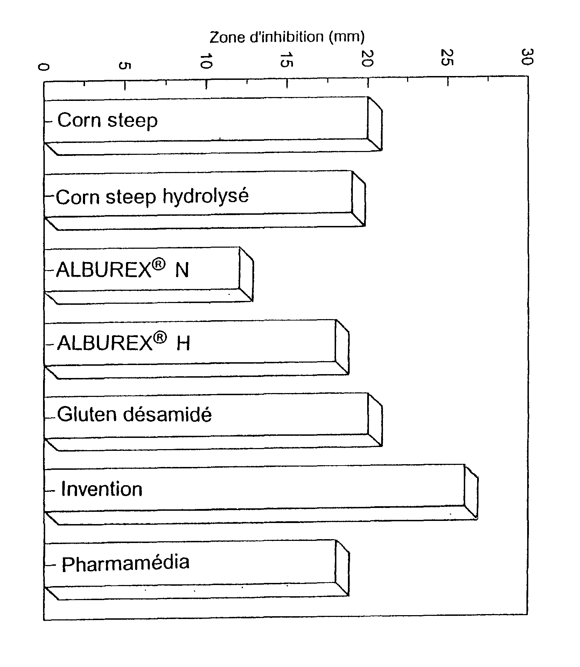

Ces résultats sont représentés sur la figure 1.

Des sept matières premières testées, c'est avec la composition azotée selon l'invention que l'on obtient la plus grande zone d'inhibition.

## Revendications

1. Composition azotée résultant de l'hydrolyse du gluten de blé par de l'eau de trempe issue de l'amidonnerie de maïs, **caractérisée en ce qu'**elle présente un rapport des concentrations en phosphore inorganique sur phosphore total (Pi/Pt) supérieur ou égal à 0,15 et un rapport des concentrations en azote aminé et azote total (Na/Nt) supérieur ou égal à 0,11.

2. Composition azotée selon la revendication 1, **caractérisée en ce qu'**elle présente un taux de protéines totales compris entre 50 et 85 % sur sec et un taux de protéines solubles compris entre 40 et 65 % sur sec.

3. Composition azotée selon la revendication 1 ou 2, **caractérisée en ce qu'**elle présente une teneur en alanine libre supérieure ou égale à 1100mg/100g sec et une teneur en leucine libre supérieure ou égale à 1300mg/100g sec.

4. Composition azotée selon l'une quelconque des revendications 1 à 3, **caractérisée en ce qu'**elle présente une teneur en cendres comprise entre 3 et 12 % sur sec, de préférence comprise entre 4 et 6 % sur sec.

5. Procédé de fabrication d'une composition azotée selon l'une quelconque des revendications 1 à 4, **caractérisé en ce qu'**on mélange du gluten de blé avec de l'eau de trempe issue de l'amidonnerie de maïs..

6. Procédé selon la revendication 5, **caractérisé en ce qu'**il comprend les étapes successives consistant à :
- mélanger de l'eau de trempe issue de l'amidonnerie de maïs avec du gluten de blé,
- laisser agir, sous agitation, les enzymes et l'acide lactique naturellement présents dans le gluten de blé et l'eau de trempe,
- inactiver les enzymes,
- concentrer la composition résultante par évaporation.

7. Procédé selon l'une des revendications 5 et 6, **caractérisé en ce qu'**on mélange l'eau de trempe avec le gluten de blé dans une proportion eau de trempe/gluten de blé comprise entre 1/1 et 1/3, sur base sèche.

8. Procédé selon l'une quelconque des revendications 5 à 7, **caractérisé en ce qu'**on ajoute, au mélange, une enzyme exogène choisie dans le groupe constitué par les protéases et les phytases seules ou en mélange entre elles.

9. Procédé selon l'une quelconque des revendications 5 à 8, **caractérisé en ce que** le gluten de blé est du gluten vert.

10. Procédé selon l'une quelconque des revendications 5 à 9, **caractérisé en ce que** la composition est concentrée jusqu'à une matière sèche supérieure ou égale à 50 %.

11. Procédé selon l'une quelconque des revendications 5 à 10, **caractérisé en ce que** la composition est atomisée.

12. Utilisation d'une composition azotée selon l'une quelconque des revendications 1 à 4 comme milieu de culture de microorganismes.

13. Utilisation d'une composition azotée selon l'une quelconque des revendications 1 à 4 en tant qu'aliment ou additif alimentaire dans des compositions destinées aux humains.

14. Utilisation d'une composition azotée selon l'une quelconque des revendications 1 à 4 en tant qu'aliment ou additif alimentaire dans des compositions destinées aux animaux.

## Patentansprüche

1. Stickstoffhaltige Zusammensetzung, die durch Hydrolyse von Weizengluten mit Hilfe von aus der Maisstärkegewinnung stammendem Quellwasser erhalten wird, **dadurch gekennzeichnet, dass** sie ein Verhältnis der Konzentrationen von anorganischem Phosphor zu Gesamtphosphor (Pi/Pt) von mehr als oder gleich 0,15 und ein Verhältnis der Konzentrationen von Aminostickstoff und Gesamtstickstoff (Na/Nt) von mehr als oder gleich 0,11 aufweist.

2. Stickstoffhaltige Zusammensetzung nach Anspruch 1, **dadurch gekennzeichnet, dass** sie einen Gesamtproteingehalt zwischen 50 und 85% trocken und einen Gehalt an löslichen Proteinen zwischen 40 und 65% trocken besitzt.

3. Stickstoffhaltige Zusammensetzung nach Anspruch 1 oder 2, **dadurch gekennzeichnet, dass** sie einen Gehalt an freiem Alanin von mehr als oder gleich 1100mg/100g trocken und einen Gehalt an freiem Leucin von mehr als oder gleich 1300 mg/100g trocken besitzt.

4. Stickstoffhaltige Zusammensetzung nach einem der Ansprüche 1 bis 3, **dadurch gekennzeichnet, dass** sie einen Gehalt an Aschen zwischen 3 und 12% trocken, vorzugsweise zwischen 4 und 6% trocken, besitzt.

5. Verfahren zur Herstellung einer stickstoffhaltigen Zusammensetzung nach einem der Ansprüche 1 bis 4, **dadurch gekennzeichnet, dass** man Weizengluten mit von der Maisstärkegewinnung stammendem Quellwasser mischt.

6. Verfahren nach Anspruch 5, **dadurch gekennzeichnet, dass** es die folgenden Schritte umfasst:
- das von der Maisstärkegewinnung stammende Quellwasser mit Weizengluten mischen,
- die Enzyme und die Milchsäure, die im Weizengluten natürlich vorhanden sind, unter Rühren wirken lassen,
- die Enzyme inaktivieren,
- die erhaltene Zusammensetzung durch Abdampfen konzentrieren.

7. Verfahren nach einem der Ansprüche 5 und 6, **dadurch gekennzeichnet, dass** man das Quellwasser mit Weizengluten in einem Verhältnis von Quellwasser/Weizengluten zwischen 1/1 und 1/3 auf trockener Basis mischt.

8. Verfahren nach einem der Ansprüche 5 bis 7, **dadurch gekennzeichnet, dass** man der Mischung ein exogenes Enzym zusetzt, das aus der Gruppe ausgewählt ist, die aus den Proteasen und den Phytasen allein oder in Mischung miteinander besteht.

9. Verfahren nach einem der Ansprüche 5 bis 8, **dadurch gekennzeichnet, dass** das Weizengluten grünes Gluten ist.

10. Verfahren nach einem der Ansprüche 5 bis 9, **dadurch gekennzeichnet, dass** die Zusammensetzung bis zu einem Trockenmassegehalt von mehr als oder gleich 50% konzentriert wird.

11. Verfahren nach einem der Ansprüche 5 bis 10, **dadurch gekennzeichnet, dass** die Zusammensetzung sprühgetrocknet wird.

12. Verwendung einer stickstoffhaltigen Zusammensetzung nach einem der Ansprüche 1 bis 4 als Kulturmedium für Mikroorganismen.

13. Verwendung einer stickstoffhaltigen Zusammensetzung nach einem der Ansprüche 1 bis 4 als Nahrungsmittel oder Nahrungsmittelzusatz in für Menschen bestimmten Zusammensetzungen.

14. Verwendung einer stickstoffhaltigen Zusammensetzung nach einem der Ansprüche 1 bis 4 als Nahrungsmittel oder Nahrungsmittelzusatz in für Tiere bestimmten Zusammensetzungen.

## Claims

1. Nitrogenous composition resulting from the hydrolysis of wheat gluten by steepwater obtained from the maize starch industry, **characterized in that** it exhibits a ratio of inorganic phosphorus to total phosphorus (Pi/Pt) concentrations greater than or equal to 0.15 and a ratio of amino nitrogen to total nitrogen (Na/Nt) concentrations greater than or equal to 0.11.

2. Nitrogenous composition according to Claim 1, **characterized in that** it exhibits a total protein level of between 50 and 85% on a dry basis and a soluble protein level of between 40 and 65% on a dry basis.

3. Nitrogenous composition according to Claim 1 or 2, **characterized in that** it exhibits a free alanine content greater than or equal to 1100 mg/100 g on a dry basis and a free leucine content greater than or equal to 1300 mg/100 g on a dry basis.

4. Nitrogenous composition according to any one of Claims 1 to 3, **characterized in that** it exhibits an ash content of between 3 and 12% on a dry basis, preferably of between 4 and 6% on a dry basis.

5. Process for the manufacture of a nitrogenous composition according to any one of Claims 1 to 4, **characterized in that** wheat gluten is mixed with steepwater obtained from the maize starch industry.

6. Process according to Claim 5, **characterized in that** it comprises the successive steps consisting in:
- mixing steepwater obtained from the maize starch industry with wheat gluten,
- allowing the enzymes and the lactic acid, which are naturally present in the wheat gluten, and the steepwater to act, with stirring,
- inactivating the enzymes,
- concentrating the resulting composition by evaporation.

7. Process according to either of Claims 5 and 6, **characterized in that** the steepwater is mixed with the wheat gluten in a steepwater/wheat gluten proportion of between 1/1 and 1/3, on a dry basis.

8. Process according to any one of Claims 5 to 7, **characterized in that** an exogenous enzyme, chosen from the group consisting of proteases and phytases alone or in a mixture with each other, is added to the mixture.

9. Process according to any one of Claims 5 to 8, **characterized in that** the wheat gluten is green gluten.

10. Process according to any one of Claims 5 to 9, **characterized in that** the composition is concentrated to a dry matter greater than or equal to 50%.

11. Process according to any one of Claims 5 to 10, **characterized in that** the composition is spray-dried.

12. Use of a nitrogenous composition according to any one of Claims 1 to 4, as microorganism culture medium.

13. Use of a nitrogenous composition according to any one of Claims 1 to 4, as food or food additive in compositions intended for humans.

14. Use of a nitrogenous composition according to any one of Claims 1 to 4, as food or food additive in compositions intended for animals.
